# EUROPEAN PATENT APPLICATION

(11) **EP 4 400 429 A1**
(43) Date of publication of application: **17.07.2024**
(21) Application number: 23305051.7
(22) Date of filing: 13.01.2023
(51) Int. Cl.: B64F 5/10, B64F 5/40, G05B 19/18

(54) **METHOD OF MANUFACTURING AN AIRCRAFT ASSEMBLY**

(71) Applicant: Airbus Operations Limited, Bristol BS34 7PA (GB); AIRBUS OPERATIONS (S.A.S.), 31060 Toulouse (FR)
(72) Inventor: KELLY, Peter, BRISTOL (GB); JONES, Timothy, BRISTOL (GB); LAVERNE, Julien, TOULOUSE (FR)
(74) Representative: Willows, Ben Ellis

(57) **Abstract**

A method of manufacturing an aircraft assembly includes forming a first tension hole in a first aircraft component and a second tension hole in a second aircraft component. The first and second aircraft components are positioned relative to each other such that the first tension hole at least partially overlies the second tension hole, to define a pair of tension holes. The first aircraft component is secured relative to the second aircraft component by providing a first fastener between the first tension hole and the second tension hole of the pair of tension holes. A first shear hole is formed in the first aircraft component and a second shear hole is formed in the second aircraft component. The first shear hole is axially aligned with the second shear hole, to define a pair of shear holes. A second fastener is provided between the first shear hole and the second shear hole of the pair of shear holes.

## Description

### TECHNICAL FIELD

The present invention relates to a method of manufacturing an aircraft assembly, the aircraft assembly, and an aircraft.

### BACKGROUND

The manufacture of an aircraft, or a part of the aircraft, may be time and resource intensive. It may therefore be desirable to reduce the time taken to manufacture aircraft, or parts of aircraft.

### SUMMARY

According to a first aspect of the present invention, there is provided a method of manufacturing an aircraft assembly, the method comprising: forming a first tension hole in a first aircraft component and forming a second tension hole in a second aircraft component; positioning the first aircraft component relative to the second aircraft component such that the first tension hole at least partially overlies the second tension hole, to define a pair of tension holes; securing the first aircraft component relative to the second aircraft component by providing a first fastener between the first tension hole and the second tension hole of the pair of tension holes; forming a first shear hole in the first aircraft component and a second shear hole in the second aircraft component, wherein the first shear hole is axially aligned with the second shear hole, to define a pair of shear holes; and providing a second fastener between the first shear hole and the second shear hole of the pair of shear holes.

In the method of the first aspect of the present invention, the first and second tension holes are formed in the first and second aircraft components before the aircraft components are positioned and secured relative to each other. This may allow the tension holes to be used to ensure that the first and second aircraft components are positioned correctly. The tension holes may also be used to secure the first aircraft component relative to the second aircraft component, through the use of the first fastener. As the tension holes are formed before positioning the first and second aircraft components, they do not need to be formed while the aircraft components are secured relative to each other. This may reduce the number of holes required to be formed while the aircraft components are secured relative to each other. If the tension holes were instead formed while the aircraft components are secured relative to each other, the aircraft assembly may need to be disassembled to be cleaned and/or to add a sealant, and then reassembled. Pre-forming the tension holes in the first and second aircraft components before positioning and securing the aircraft components relative to each other may remove the need to disassemble and reassemble the aircraft assembly, which may reduce the time taken to manufacture the aircraft assembly. A central axis of the first shear hole may be aligned with a central axis of the second shear hole such that the pair of shear holes are concentric with each other.

Optionally, forming the first shear hole in the first aircraft component and the second shear hole in the second aircraft component occurs immediately after securing the first aircraft component relative to the second aircraft component. Optionally, providing the second fastener occurs immediately after forming the first shear hole in the first aircraft component and the second shear hole in the second aircraft component.

Optionally, the first fastener remains in place between the first tension hole and the second tension hole of the pair of tension holes during forming the first shear hole in the first aircraft component and the second shear hole in the second aircraft component. The first fastener may prevent the first aircraft component moving relative to the second aircraft component while the shear holes are formed. This may mean that an additional external clamp is not needed to hold the first aircraft component in place relative to the second aircraft component. This may simplify the assembly process and reduce time taken to manufacture the aircraft assembly.

Optionally, forming the first shear hole comprises using a drill to form the first shear hole in the first aircraft component, and wherein forming the second shear hole comprises using the drill to form the second shear hole in the second aircraft component. The use of a drill to form the shear holes provides a relatively easy way to form the shear holes. Optionally, the drill is hand operated. Optionally, the drill is computer controlled.

Optionally, forming the first shear hole and the second shear hole comprises using a rack feed drill. Optionally, forming the first shear hole and the second shear hole comprises using an advanced drilling unit (ADU). Optionally, a jig may be used with the rack feed drill and/or the ADD to align the respective rack feed drill or ADU with the first and second aircraft components. The use of the rack feed drill or the ADU, along with the jig, may allow greater control over drilling the shear holes, and may improve the accuracy and/or consistency of the location of the shear holes.

Optionally, the method comprises forming the pair of first and second shear holes by drilling through the first aircraft component and the second aircraft component consecutively with a single drill bit. This may ensure that the first and second shear holes are axially aligned with each other and have the same diameter.

Optionally, the method comprises drilling through both the first aircraft component and the second aircraft component from a same side of the first aircraft component or the second aircraft component. By drilling the holes from the same side of the first or second aircraft component, this may improve ergonomics of the assembly process. For example, it may not be required for a worker or their tools to be present on opposite sides of the aircraft components, where space may be limited due to the size of the respective aircraft components. This may also reduce the likelihood of damaging the aircraft components by moving tools between different sides of the aircraft components.

Optionally, the method comprises changing a rotational speed of the drill bit as it passes through the first aircraft component and the second aircraft component. This may reduce wear on the drill bit and may also reduce heat generated by the drill bit.

Optionally, the first and second tension holes have a first diameter, and the first and second shear holes have a second diameter smaller than the first diameter. As the tension holes have a larger diameter than the shear holes, the pair of tension holes may not need to be concentric to allow a fastener to pass between the pair. This may provide greater tolerance in the forming of the tension holes. This may simplify the manufacturing process and reduce overall assembly time. Optionally, the first diameter is between approximately 3mm and 25mm. Optionally, the second diameter is between approximately 3mm and 25mm.

Optionally, the first and second tension holes have a substantially circular cross-sectional shape. Optionally, the first and second shear holes have a substantially circular cross-sectional shape.

Optionally, the method comprises forming pilot holes corresponding to the first and second shear holes prior to forming the first and second shear holes. The pilot holes may reduce the amount of drilling that is needed when the first and second aircraft components are secured together. The pilot holes may also help to align the drill when forming the shear holes, which may reduce the time taken to manufacture the aircraft assembly, by reducing the time taken to align the drill to form the shear holes. Optionally, the pilot holes have a diameter which is at least 0.2mm, at least 0.5mm or at least 1mm smaller than the second diameter. Optionally, the diameter of the pilot holes is at least 0.4mm smaller than the second diameter.

Optionally, forming the first and second shear holes comprises drilling the pilot holes to the second diameter.

Optionally, forming the first and second shear holes comprises drilling the pilot holes to a third diameter, smaller than the second diameter, and then reaming to the second diameter. By initially forming the shear holes undersize, and then reaming to the second diameter, this may provide a greater accuracy to the diameter of the shear holes.

Optionally, forming the first and second tension holes occurs while the first and second aircraft components are at a first location, and securing the first aircraft component relative to the second aircraft component occurs while the first and second aircraft components are at a second location, different to the first location. By forming the tension holes while the aircraft components are at a different location than when the aircraft components are secured together, the first and second tension holes are pre-formed in the first and second aircraft components before the aircraft components are secured in place relative to each other. This may reduce the time taken to manufacture the aircraft assembly by reducing the need to disassemble and reassemble the aircraft assembly after the aircraft components have been secured relative to each other. For example, if the tension holes were instead formed while the aircraft components are secured relative to each other at the second location, the aircraft assembly may need to be disassembled to be cleaned and/or to add a sealant, and then reassembled. Pre-forming the tension holes in the first and second aircraft components while the aircraft components are at the first location may remove the need to disassemble and then reassemble the aircraft assembly, which may reduce time taken to manufacture the aircraft assembly. This may also reduce the number of actions that need to take place at the second location, and may reduce the amount of equipment required at the second location. When the tension holes are formed at the first location, the machinery required to form the tension holes does not need to be present at the second location, which may simplify the second location.

Optionally, forming the first tension hole in the first aircraft component occurs at the first location and forming the second tension hole in the second aircraft component occurs separately at the first location. Optionally, the method comprises moving the first aircraft component and the second aircraft component from the first location to the second location before positioning the first aircraft component relative to the second aircraft component.

Optionally, forming the first and second tension holes comprises using a computer numerical control (CNC) machine to form the first and second tension holes. By using a CNC machine, the accuracy of the location of the tension holes may be improved compared to using a hand operated tool The CNC machine may be used without using a jig to hold the first and second aircraft components in place. Moreover, instructions used to form the tension holes using the CNC machine may be repeated and reused during manufacturing of subsequent assemblies, which may improve consistency between assemblies. Optionally, the CNC machine is a cartesian CNC machine. Optionally, the CNC machine is a CNC milling machine.

Optionally, the method comprises adjusting a position of the first aircraft component relative to the second aircraft component, such that the first tension hole overlaps the second tension hole by at least 25%, at least 50% or at least 75% when the first aircraft component is secured relative to the second aircraft component. The overlap may be adjusted to ensure that the first tension hole overlaps the second tension hole by a predetermined amount. This may allow the first aircraft component to be aligned with, and secured in place relative to, the second aircraft component even if the tension holes are not concentric/axially aligned.

Optionally, the method comprises forming a plurality of first tension holes and first shear holes in the first aircraft component, and forming a plurality of second tension holes and second shear holes in the second aircraft component.

Optionally, the method comprises positioning the first aircraft component relative to the second aircraft component such that each first tension hole of the plurality of first tension holes at least partially overlies a different second tension hole of the plurality of second tension holes, to define pairs of tension holes, and securing the first aircraft component relative to the second aircraft component by providing a separate first fastener between each first tension hole and each second tension hole of each pair of tension holes. This may provide a more secure connection between the first aircraft component and the second aircraft component. This may also provide greater resistance to tension forces between the first and second aircraft components, as the tension forces may be shared by the fasteners.

Optionally, wherein each first shear hole of the plurality of first shear holes is axially aligned with a different second shear hole of the plurality of second shear holes, to define pairs of second shear holes, and the method comprises providing a separate second fastener between each first shear hole and each second shear hole of each pair of shear holes. This may provide a more secure connection between the first aircraft component and the second aircraft component. This may provide greater resistance to shear forces between the first and second aircraft components, as the shear forces may be shared by the fasteners.

Optionally, forming the plurality of first shear holes in the first aircraft component comprises forming the plurality of first shear holes in a face of the first aircraft component, wherein forming the plurality of second shear holes in the second aircraft component comprises forming the plurality of second shear holes in a face of the second aircraft component, and wherein the plurality of first and second shear holes are formed in respective corners of the face of the first aircraft component and the face of the second aircraft component. By forming the shear holes in the corners of the faces of the aircraft components, this may ensure that the shear holes are located where the maximum shear force may be experienced.

Optionally, the method comprises forming a greater number of first and second tension holes than first and second shear holes in the first and second aircraft components respectively. As the fasteners provided between pairs of tension holes may be subject to less complex forces than fasteners between shear holes, it may be possible to use a simpler and cheaper fastener between tension holes. Therefore, having a greater proportion of tension holes compared to shear holes may reduce overall cost of the assembly as compared to an equal number of shear holes.

Optionally, the first fastener has the same dimensions as the second fastener. This may allow the same fasteners to be used with either the tension holes or the shear holes.

Optionally, the first fastener is the same as the second fastener. This may reduce the likelihood of the wrong fastener being used as all of the fasteners are the same. This may also reduce costs involved in the manufacture of the aircraft assembly as only a single specification of fastener is required to be obtained and stored.

Optionally, the first and second fasteners comprise a nut and bolt. The nut and bolt may provide a relatively simple fastener. Optionally, the bolt comprises an end cap with a diameter larger than the first and second diameters. Optionally, the nut comprises a diameter larger than the first and second diameters. This may ensure that the nut and/or bolt does not slip through the first and second tension holes and/or the first and second shear holes.

Optionally, the first diameter is up to around 200 microns, up to around 300 microns, up to around 400 microns or up to around 500 microns larger than a diameter of the first fastener. This may provide the necessary tolerance for the first tension hole to partially overlap the second tension hole while still allowing the first fastener to pass through the first and second tension holes.

Optionally, the second diameter is between around 50 microns and 80 microns larger than a diameter of the second fastener. This may help to prevent the first aircraft component from sliding along the second aircraft component, when under shear load.

Optionally, the first fastener is located within the first and second tension holes of the pair of tension holes and does not touch an inner surface of the first or second tension hole. This may reduce the likelihood of the fastener bending when a shear force is experienced between the first and second aircraft components, as the fastener is not in contact with the inner surface of the first or second tension holes.

Optionally, the second fastener is located within the first and second shear holes of the pair of shear holes and is in contact with an inner surface of at least one of the first or second shear holes. This may ensure that the fastener opposes a shear force experienced between the first aircraft component and the second aircraft component, as the fastener is in contact with the inner surface of the first or second shear hole.

Optionally, the method comprises providing a sealant between the first aircraft component and the second aircraft component before securing the first aircraft component in place relative to the second aircraft component. By providing the sealant between the first aircraft component and the second aircraft component before securing the first aircraft component in place relative to the second aircraft component, this may reduce the need to subsequently detach the first aircraft component from the second aircraft component. This may help to increase efficiency of manufacturing the aircraft assembly, by reducing the time taken to manufacture the aircraft assembly.

Optionally, the first aircraft component comprises an aircraft wing and the second aircraft component comprises an aircraft fuselage. Optionally, the first aircraft component comprises an aircraft wing spar and the second aircraft component comprises an aircraft wing cover.

Optionally, the first aircraft component is automatically positioned relative to the second aircraft component. This may speed up the assembly process. This may also increase the precision of positioning the first aircraft component relative to the second aircraft component. Optionally, the first aircraft component is positioned relative to the second aircraft component using a computer-controlled mechanical arm.

Optionally, positioning the first aircraft component relative to the second aircraft component comprises using satellite navigation to determine the position of the first aircraft component relative to the second aircraft component. This may increase the accuracy of positioning the first aircraft component relative to the second aircraft component. Optionally, the satellite navigation comprising global positioning system (GPS).

According to a second aspect of the present invention, there is provided an aircraft assembly obtained by the method according to the first aspect of the present invention.

According to a third aspect of the present invention, there is provided an aircraft comprising the aircraft assembly according the first aspect of the present invention or the second aspect of the present invention.

### BRIEF DESCRIPTION OF THE DRAWINGS

Embodiments of the invention will now be described, by way of example only, with reference to the accompanying drawings, in which:
Figure 1 shows a schematic view of an aircraft;
Figure 2 shows a schematic exploded view of an aircraft assembly;
Figure 3 shows a schematic exploded views of a first fastener and a second fastener of the aircraft assembly;
Figure 4 shows a cross-sectional view of a part of the aircraft assembly;
Figure 5 shows a schematic side view of the part of the aircraft assembly of Figure 4; and

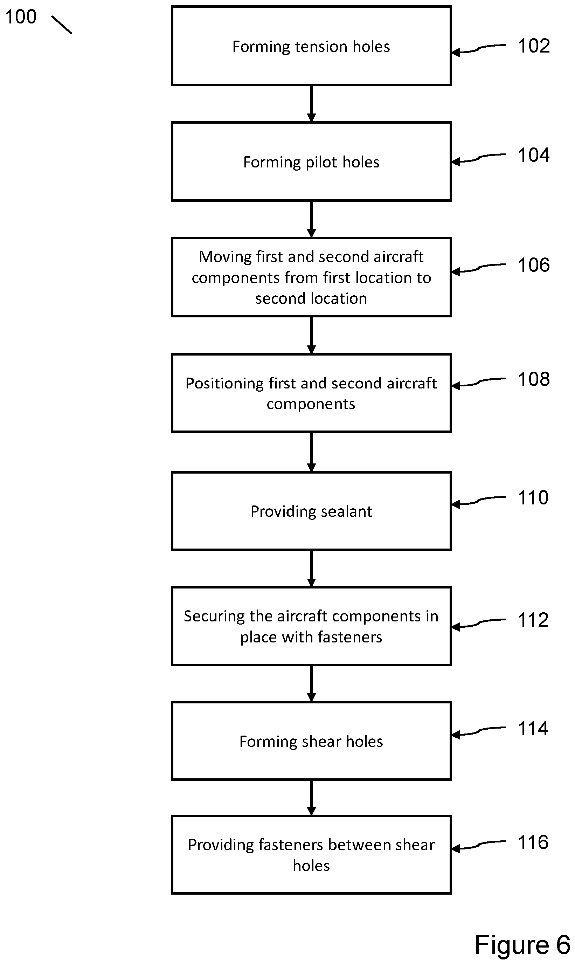

Figure 6 shows a flow diagram of a method of manufacturing the aircraft assembly.

### DETAILED DESCRIPTION

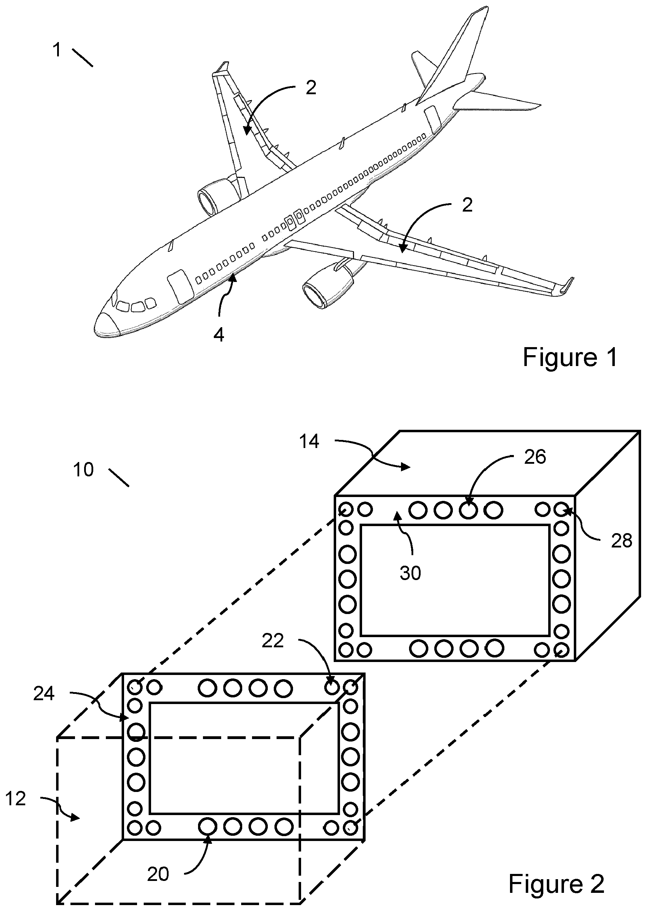

An aircraft 1 is shown schematically in Figure 1. The aircraft 1 comprises a pair of wings 2 and a fuselage 4.

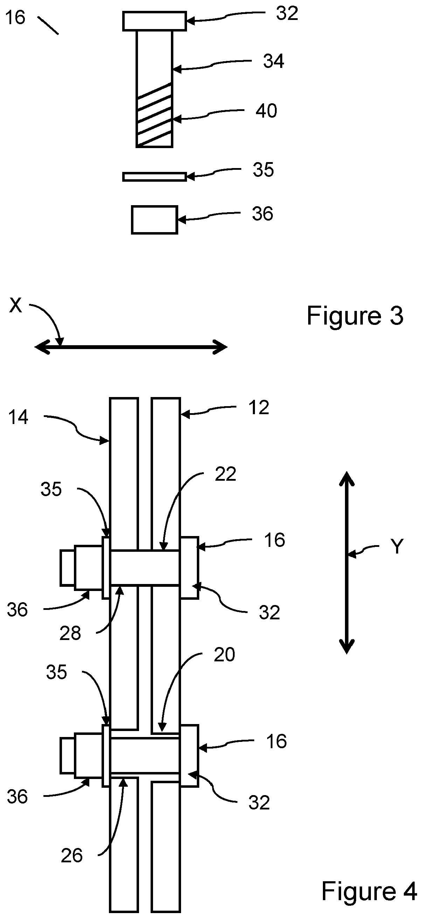

An aircraft assembly 10 is shown in an exploded view in Figure 2. The aircraft assembly 10 comprises a first aircraft component 12 which is part of one of the wings 2 and a second aircraft component 14 which is part of the fuselage 4. The first aircraft component 12 is secured to the second aircraft component 14 by fasteners 16, which are shown in an exploded view in Figure 3.

The first aircraft component 12 comprises a face 24 which is substantially planar in shape. Fourteen tension holes 20 and twelve shear holes 22 are formed around a periphery of the face 24 of the first aircraft component 12. Three shear holes 22 are formed in each corner of the face 24 of the first aircraft component 12, with the tension holes 20 formed along the periphery of the face 24 between the corners. The tension holes 20 and the shear holes 22 all have a substantially circular cross-sectional shape. The tension holes 20 have a first diameter, and the shear holes 22 have a second diameter, smaller than the first diameter. The first diameter is around 25mm and the second diameter is around 16mm.

The second aircraft component 14 comprises a face 30 which is substantially planar in shape. Fourteen tension holes 26 and twelve shear holes 28 are formed around a periphery of the face 30 of the second aircraft component 14. Three shear holes 28 are formed in each corner of the face 30 of the second aircraft component 14, with the tension holes 26 formed along the periphery of the face 30 between the corners. The tension holes 26 and the shear holes 28 are spaced from each other by approximately twice a diameter of the fasteners 16. In some examples, the tension holes 26 and the shear holes 28 are spaced from each other by up to five times the diameter of the fasteners 16. The tension holes 26 and shear holes 28 of the second aircraft component 14 are formed in substantially the same pattern as the tension holes 20 and shear holes 22 formed in the first aircraft component 12.

The tension holes 26 and the shear holes 28 formed in the second aircraft component 14 all have a substantially circular cross-sectional shape. The tension holes 26 have the same first diameter as the tension holes 20 formed in the first aircraft component 12, and the shear holes 28 have the same second diameter as the shear holes 22 formed in the first aircraft component 12.

The fasteners 16 are shown in the exploded schematic view in Figure 3. The fasteners 16 comprise an end cap portion 32, an elongate portion 34, a washer 35 and a nut 36. The end cap portion 32 has a diameter which is around 1.6 times larger than the diameter for the tension holes 20, 26 and the diameter of the shear holes 22, 28. The elongate portion 34 is substantially cylindrical in shape and comprises a threaded portion 38 which is configured to engage with a corresponding threaded portion 40 of the nut 36. The elongate portion 34 has a diameter which is substantially equal to the diameter of the shear holes 22, 28. The washer 35 has a substantially circular cross-sectional shape and has an outer diameter which is larger than the diameters of the tension holes 20, 26 and the shear holes 22, 28.

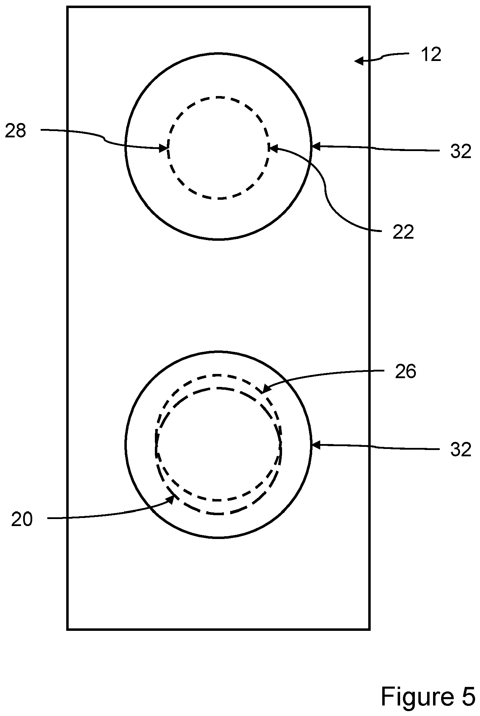

When the first aircraft component 12 is secured to the second aircraft component 14, as illustrated in the partial cross-sectional view of Figure 4, the shear holes 22 of the first aircraft component 12 overlie the shear holes 28 of the second aircraft component 14, to define pairs of shear holes 22, 28. Figure 5 shows a schematic side view of the aircraft assembly shown in Figure 4, from the first aircraft component 12. A central axis of each shear hole 22 in the first aircraft component 12 is aligned with a central axis of the shear hole 28 it overlies, such that the shear holes 20, 28 are concentric.

The fasteners extend through respective pairs of shear holes 22, 28 such that the elongate portion 34 contacts the first aircraft component 12 and the second aircraft component 14 when the first aircraft component 12 is secured to the second aircraft component 14. The fasteners 16, together with the shear holes 22, 28, are configured to oppose shear force (i.e. forces in the direction indicated by arrow Y in Figure 4) between the first and second aircraft components 12, 14.

Each tension hole 20 in the first aircraft component 12 overlies a different second tension hole 26 in the second aircraft component 14, to define pairs of tension holes 20, 26. A central axis of each tension hole 20 is parallel to, but offset from, a central axis of the corresponding second tension hole 26 it overlies, such that the tension holes 20, 26 are not concentric, as shown in Figure 5.

The fasteners 16 extend through respective pairs of tension holes 20, 26 such that the elongate portion 34 of the fastener 16 does not contact the first aircraft component 12 or the second aircraft component 14 when the first aircraft component 12 is secured to the second aircraft component 14. The fasteners 16, together with the tension holes 20, 26, are configured to oppose tension force (i.e. forces in the direction indicated by arrow X in Figure 4) experienced between the first and second aircraft components 12, 14.

The fasteners 16 are arranged such that their respective end cap portions 32 are located on the same side of the first aircraft component 12. The end cap portions 32 of the fasteners 16 are in contact with the first aircraft component 12. The washers 35 are located on the elongate portions 34 of the respective fastener 16. The nuts 36 of the fasteners 16 engage with the threaded portions 40 of the respective elongate portions 34 such that, as each nut 36 is tightened onto the respective threaded portion 40, the nut 36 contacts the washer 36 to force the washer 36 against the second aircraft component 14. This causes the end cap portions 32 and the washers 35 of the fasteners 16 to exert a force on the first and second aircraft components 12, 14, to secure the first aircraft component 12 to the second aircraft component 14.

Although only two fasteners are shown in Figures 4 and 5, in the example of Figure 2, fasteners 16 are provided between each pair of tension holes 20, 26, and between each pair of shear holes 22, 28. A total of twenty six fasteners 16 are used to secure the first aircraft component 12 to the second aircraft component 14. Moreover, although the same type of fastener 16 is used between the pairs of tension holes 20, 26 and the pairs of shear holes 22, 28 in this example, in some examples a fastener 16 with a different structure may be used between the pairs of tension holes 20, 26, compared to between the pairs of shear holes 22, 28.

A flow diagram illustrating the method 100 of manufacturing the aircraft assembly 10 is shown in Figure 5. The method 100 comprises forming 102 the tension holes 20, 26 in the first and second aircraft components 12, 14. The tension holes 20, 26 are formed using a computer numerical control (CNC) milling machine which mills the tension holes 20, 26 to the first diameter.

The tension holes 20, 26 are formed in the first and second aircraft components 12, 14 while the first and second aircraft components 12, 14 are at a first location. While the first and second aircraft components 12, 14 are at the first location, the method 100 also comprises forming 104 a plurality of pilot holes in the first and second aircraft components, corresponding to the shear holes 22, 28. The tension holes 20, 26 are cleaned (e.g. by deburring) while the first and second aircraft components 12, 14 are at the first location. As the tension holes 20, 26 are preformed and cleaned before the first and second aircraft components are moved to a second position for final assembly, this reduces the need to form the tension holes 20, 26, disassemble and clean the aircraft assembly 10, and reassemble the aircraft assembly 10 during final assembly, which may decrease the time taken to manufacture the aircraft assembly 10.

The method 100 further comprises moving 106 the first and second aircraft components 12, 14 from the first location to the second location, different to the first location, and positioning 108 the first and second aircraft components 12, 14 relative to each other such that the tension hole 20 of the first aircraft component 12 at least partially overlies the tension holes 26 of the second aircraft component 14. The second location is a location at which final assembly of the aircraft assembly 10 occurs (i.e. the first aircraft component 12 remains secured to the second aircraft component 14 when leaving the second location).

After the first and second aircraft components 12, 14 have been positioned relative to each other, the method 100 comprises providing 110 a sealant between the first and second aircraft components 12, 14 and securing 112 the first aircraft component 12 in place relative to the second aircraft component using the first fastener 16 which is inserted through the tension holes 20, 26. The first fastener 16 is tightened to prevent the first aircraft component 12 from moving relative to the second aircraft component 14.

While the first aircraft component 12 is secured relative to the second aircraft component 14, the method 100 comprises forming 114 the shear holes 22, 28 in the first and second aircraft components 12, 14. The shear holes 22, 28 are formed by using a rack feed drill to drill the pilot holes to a diameter smaller than the second diameter, and then reaming to the second diameter.

After the shear holes 22, 28 have been formed, the method 100 comprises providing 116 the fasteners 16 between the shear holes 22, 28. The fasteners 16 are then tightened to a predetermined torque to fully secure the first aircraft component 12 to the second aircraft component 14 and form the aircraft assembly 10.

Following tightening the fasteners 16, the first and second aircraft components 12, 14 are cleaned and sealant is provided over the fasteners 16, and a join created between the first and second aircraft components 12, 14 is then fillet sealed.

The method 100 discussed herein may reduce the overall time taken to manufacture the aircraft assembly 10 by reducing the number of steps in the manufacturing process. By pre-forming the tension holes 20, 26 in the first and second aircraft components 12, 14 before securing the aircraft components 12, 14 relative to each other, this may remove the need to disassemble and then reassemble the aircraft assembly 10 after the first and second aircraft components 12, 14 have been secured relative to each other. Reducing the time taken to manufacture the aircraft assembly 10 may also reduce costs associated with the manufacturing process.

It is to noted that the term "or" as used herein is to be interpreted to mean "and/or", unless expressly stated otherwise. Example embodiments of the present invention have been discussed, with reference to the examples illustrated. However, it will be appreciated that variations and modifications may be made without departing from the scope of the invention as defined by the appended claims.

## Claims

1. A method of manufacturing an aircraft assembly, the method comprising:
forming a first tension hole in a first aircraft component and forming a second tension hole in a second aircraft component;
positioning the first aircraft component relative to the second aircraft component such that the first tension hole at least partially overlies the second tension hole, to define a pair of tension holes;
securing the first aircraft component relative to the second aircraft component by providing a first fastener between the first tension hole and the second tension hole of the pair of tension holes;
forming a first shear hole in the first aircraft component and a second shear hole in the second aircraft component, wherein the first shear hole is axially aligned with the second shear hole, to define a pair of shear holes; and
providing a second fastener between the first shear hole and the second shear hole of the pair of shear holes.

2. The method according to claim 1, wherein forming the first shear hole comprises using a drill to form the first shear hole in the first aircraft component, and wherein forming the second shear hole comprises using the drill to form the second shear hole in the second aircraft component.

3. The method according to claim 1 or claim 2, comprising forming the pair of shear holes by drilling through the first aircraft component and the second aircraft component consecutively with a single drill bit.

4. The method according to claim 3, comprising drilling through both the first aircraft component and the second aircraft component from a same side of the first aircraft component or the second aircraft component.

5. The method according to any one of claims 1 to 4, wherein the first and second tension holes have a first diameter, and the first and second shear holes have a second diameter smaller than the first diameter.

6. The method according to claim 5, comprising forming pilot holes corresponding to the first and second shear holes prior to forming first and second shear holes.

7. The method according to claim 6, wherein forming the first and second shear holes comprises drilling the pilot holes to the second diameter.

8. The method according to claim 6, wherein forming the first and second shear holes comprises drilling the pilot holes to a third diameter, smaller than the second diameter, and reaming to the second diameter.

9. The method according to any one of claims 1 to 8, wherein forming the first and second tension holes occurs while the first and second aircraft components are at a first location, and forming the first and second shear holes occurs while the first and second aircraft components are at a second location, different to the first location.

10. The method according to any one of claims 1 to 9, wherein forming the first and second tension holes comprises using a computer numerical control (CNC) machine to form the first and second tension holes.

11. The method according to any one of claims 1 to 10, comprising forming a plurality of first tension holes and first shear holes in the first aircraft component, and forming a plurality of second tension holes and second shear holes in the second aircraft component.

12. The method according to claim 11, wherein forming the plurality of first shear holes in the first aircraft component comprises forming the plurality of first shear holes in a face of the first aircraft component, wherein forming the plurality of second shear holes in the second aircraft component comprises forming the plurality of second shear holes in a face of the second aircraft component, and wherein the plurality of first and second shear holes are formed in respective corners of the face of the first aircraft component and the face of the second aircraft component.

13. The method according to claim 11 or claim 12, comprising forming a greater number of first and second tension holes than first and second shear holes in the first and second aircraft components respectively.

14. The method according to any one of claims 1 to 13, wherein the first fastener is the same as the second fastener.

15. The method according to any one of claims 1 to 14, comprising providing a sealant between the first aircraft component and the second aircraft component before securing the first aircraft component in place relative to the second aircraft component.

16. An aircraft assembly obtained by the method according to any one of claims 1 to 15.

17. An aircraft comprising the aircraft assembly according to claim 16.
